# FASCICULE DE BREVET EUROPEEN

(11) **EP 1 720 690 B1**
(45) Date de publication et mention de la délivrance du brevet: **25.12.2013**
(21) Numéro de dépôt: 05708853.6
(22) Date de dépôt: 26.02.2005
(51) Int. Cl.: B29B 11/10, B29C 43/02, B29C 45/16, B29C 47/06

(54) **DOSE MULTICOUCHE ET SON PROCEDE DE FABRICATION**
MEHRLAGIGE STRUKTUR UND VERFAHREN ZU DEREN HERSTELLUNG
MULTILAYER DOSE AND PROCESS FOR PRODUCING THE SAME

(30) Priorité: 01.03.2004 CH 3362004; 04.10.2004 CH 16192004; 08.12.2004 CH 20342004; 08.12.2004 CH 20332004
(43) Date de publication de la demande: 15.11.2006
(73) Titulaire: Aisapack Holding SA, 1896 Vouvry (CH)
(72) Inventeur: Thomasset, Jacques, CH-1896 Vouvry (CH); Roy, Hugues-Vincent, CH-1896 Vouvry (CH)
(74) Mandataire: Grosfillier, Philippe
(86) Numéro de dépôt international: PCT/IB2005/050705
(87) Numéro de publication internationale: WO 2005/087473

(56) Documents cités:
- EP-A- 1 208 955
- DE-A1- 19 814 314
- FR-A- 2 180 831
- FR-A- 2 520 288
- JP-A- 2 098 415
- JP-A- 60 259 425
- US-A- 4 154 893
- US-A- 4 876 052
- US-A1- 2003 080 461
- PATENT ABSTRACTS OF JAPAN vol. 014, no. 305 (M-0992), 29 juin 1990 (1990-06-29) & JP 02 098415 A (HIROSHI UENO), 10 avril 1990 (1990-04-10) cité dans la demande
- PATENT ABSTRACTS OF JAPAN vol. 010, no. 134 (M-479), 17 mai 1986 (1986-05-17) & JP 60 259425 A (IKEGAI TEKKO KK; others: 01), 21 décembre 1985 (1985-12-21)

## Description

### Domaine de l'invention

La présente invention concerne une méthode de réalisation d'objets multicouche selon la revendication 5 par compression moulage d'une dose multicouche selon la revendication 1.

La présente invention concerne également des procédés pour la fabrication d'une dose multicouche selon les revendications 6 et 8.

### Etat de la technique

Des objets multicouche obtenus par compression moulage d'une dose multicouche sont notamment décrits dans les documents brevets suivants : FR-A-2 520 288 ; EP-A-1 208 955 ; FR-A-2 180 831 ; JP-A-60259425 et US-A-2003/080461.

Le brevet US 4 876 052 décrit une dose multicouche (figure 1) caractérisée par le fait qu'une résine fonctionnelle 3 est complètement emprisonnée à l'intérieur d'une résine synthétique 2. La résine fonctionnelle et la résine extérieure sont de nature différente. Par exemple, la résine fonctionnelle présente des propriétés barrières aux gaz élevées, tandis que la résine formant la couche externe est choisie pour ses propriétés mécaniques et hygiéniques. Ces doses multicouches permettent d'obtenir des objets multicouche par compression moulage de ladite dose. Cependant, les objets obtenus selon la méthode décrite dans le brevet US 4 876 052 nécessitent une proportion importante de résine fonctionnelle dans l'objet ; ce qui engendre deux inconvénients majeurs ; le premier étant un coût prohibitif et le second une résistance aux sollicitations mécaniques amoindrie. L'absence d'adhésion entre la résine fonctionnelle et la résine extérieure réduit la solidité de l'objet et crée un risque de dé cohésion de la couche extérieure. Un autre inconvénient du brevet US 4 876 052 réside dans le fait que l'on ne peut que faiblement ajuster la quantité respective des résines 2 et 3. Comme il le sera montré plus loin dans l'exposé de l'invention, ces quantités sont fixées par la géométrie de l'objet et par les écoulements lors de la compression de la dose.

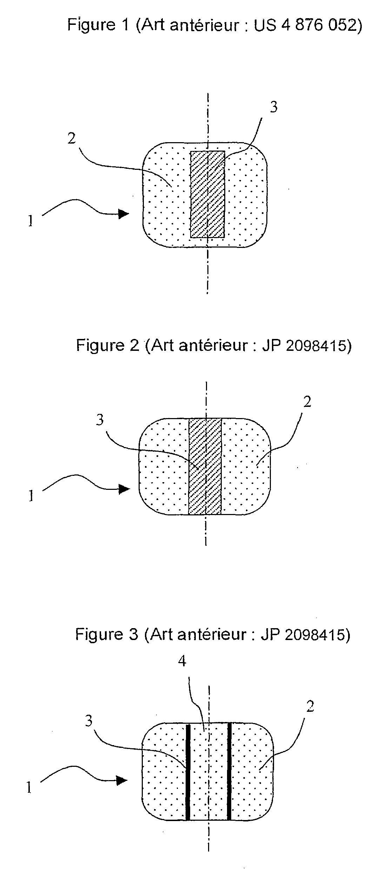

Le brevet Japonais JP 2098415 propose de réaliser un objet multicouche par compression moulage en partant d'une dose composite (figure 2) caractérisée par le fait que la résine synthétique 2 couvre seulement les faces latérales de la résine fonctionnelle 3. Le moulage par compression de cette dose selon son axe de symétrie conduit à un objet présentant une structure multicouche caractérisée par le fait que la résine synthétique 2 emprisonne partiellement la résine fonctionnelle 3. Cependant, les objets multicouches réalisés à partir de deux résines selon le brevet JP 2098415 présentent deux inconvénients majeur ; le premier étant d'avoir la résine fonctionnelle 3 exposée en surface centrale de l'objet sur au moins 10% de la surface totale de l'objet ; et le second étant de nécessiter une quantité de résine fonctionnelle 3 dans l'objet d'au moins 30% de la quantité totale de résine. Cela conduit d'une part à des objets ayant un coût prohibitif, et d'autre part à des objets présentant des propriétés mécaniques fortement modifiées principalement au centre de l'objet. Un autre inconvénient du brevet JP 2098415 réside dans le fait que l'on ne peut que faiblement ajuster la quantité respective des résines 2 et 3, ces quantités étant fixées par la géométrie de l'objet et les écoulements lors de la compression de la dose.

Il est proposé dans le brevet JP 2098415 d'utiliser une dose selon le préambule de la revendication 1 comportant 3 couches pour remédier en partie aux inconvénients précités (figure 3). Cette dose est constituée d'une première résine 4 formant la partie centrale de la dose, d'une résine fonctionnelle 3 couvrant seulement les faces latérales de la première résine, et d'une troisième résine 2 couvrant seulement les faces latérales de la résine fonctionnelle. L'écrasement de cette dose composite selon son axe de symétrie conduit à un objet multicouche. L'utilisation d'une dose tri-couche présente l'avantage de réduire la quantité de résine fonctionnelle 3 utilisée et conduit à des objets présentant des propriétés mécaniques faiblement modifiées par rapport au même objet comportant une seule résine 2. Cette méthode permet d'ajouter une couches adhésive entre les résines de nature différente ; par conséquent la cohésion et la solidité de l'objet est améliorée. Cependant, la résine fonctionnelle 3 ne couvre pas la partie centrale de l'objet multicouche ce qui conduit à des objets sans propriété barrière proche de l'axe de symétrie sur une surface d'au moins 10% de la surface de l'objet. Cette zone centrale de l'objet non couverte par la couche de résine barrière 3 diminue les performance barrière de l'objet et rend cette solution moins performante.

La demande de brevet CH01619/04 décrit des objets multicouches réalisés à partir d'une dose multicouche (figure 4) moulée par compression. Les objets décrits dans cette demande de brevet présentent une structure multicouche caractérisée par la position de la couche fonctionnelle formant un double pli en forme de zigzag. La couche fonctionnelle est correctement répartie dans tout l'objet, même dans la partie centrale. La méthode de réalisation d'objets multicouches décrite dans la demande de brevet CH01619/04 permet également de contrôler l'épaisseur de la couche fonctionnelle. Une couche adhésive peut être ajoutée entre la résine formant la surface de l'objet et la résine fonctionnelle. Cependant, la compression de la dose nécessite une méthode et un dispositif de moulage spécifique. Cette méthode requiert notamment des mouvements d'outillages supplémentaires par rapport au procédé de compression de base mettant en mouvement relatif les deux parties du moule. Dans le cas de moulage à grande cadence, il peut être pénalisant d'utiliser un dispositif de compression tel que décrit dans la demande de brevet CH01619/04.

### Objet de l'invention

La présente invention permet de réaliser des objets multicouches par compression moulage en remédiant aux problèmes précités. Cette méthode permet notamment d'utiliser un dispositif de compression sans modification par rapport au dispositif utilisé pour réaliser des objets monocouche.

### Résumé de l'invention

L'invention consiste en une dose multicouche présentant un axe de symétrie pour la réalisation d'objets multicouches par compression moulage, constituée d'une première résine synthétique et d'une fine couche fonctionnelle emprisonnée dans ladite première résine ; ladite couche fonctionnelle représentant moins de 20 % du volume de la dose ; la dose multicouche étant caractérisée en ce que la couche fonctionnelle forme l'enveloppe d'un corps de révolution autour de l'axe de symétrie et en ce que la distance de la couche à l'axe de symétrie est variable.

### Description détaillée de l'invention

L'invention sera mieux comprise ci-après au moyen d'une description détaillée des exemples illustrés par les figures suivantes.

### Brève description des figures

Les figures 1 à 4 décrivent les doses multicouches décrites dans l'art antérieur pour réaliser des objets multicouches par compression moulage.
La figure 1 montre une dose bicouche réalisée selon le brevet US 4 876 052
La figure 2 montre une dose bicouche utilisée dans le brevet JP 2098415.
La figure 3 illustre une dose comportant 3 couches décrite dans le brevet JP 2098415.
La figure 4 montre une dose multicouche annulaire décrite dans la demande de brevet CH01619/04
La figure 5 montre une dose multicouche selon le concept général de l'invention.
La figure 6 illustre l'es écoulements de matière et le profil de vitesse lors de la compression de la dose.
La figure 7 illustre la compression d'une dose telle que décrite dans le brevet JP 2098415 ainsi que l'objet multicouche obtenu.
La figure 8 montre les limites des objets multicouches obtenus selon le brevet JP 2098415.
Les figures 9 à 20 présentent des exemples de doses multicouches, leurs méthodes de réalisation et un exemple de dispositif pouvant être utilisé.

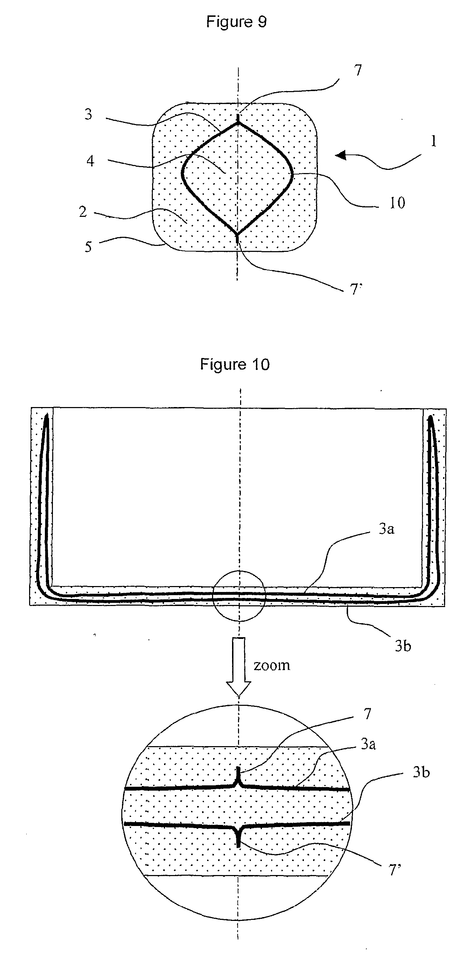

La figure 9 illustre un premier exemple de dose correspondant à l'invention.
La figure 10 montre l'objet multicouche obtenu après compression de la dose décrite sur la figure 9.

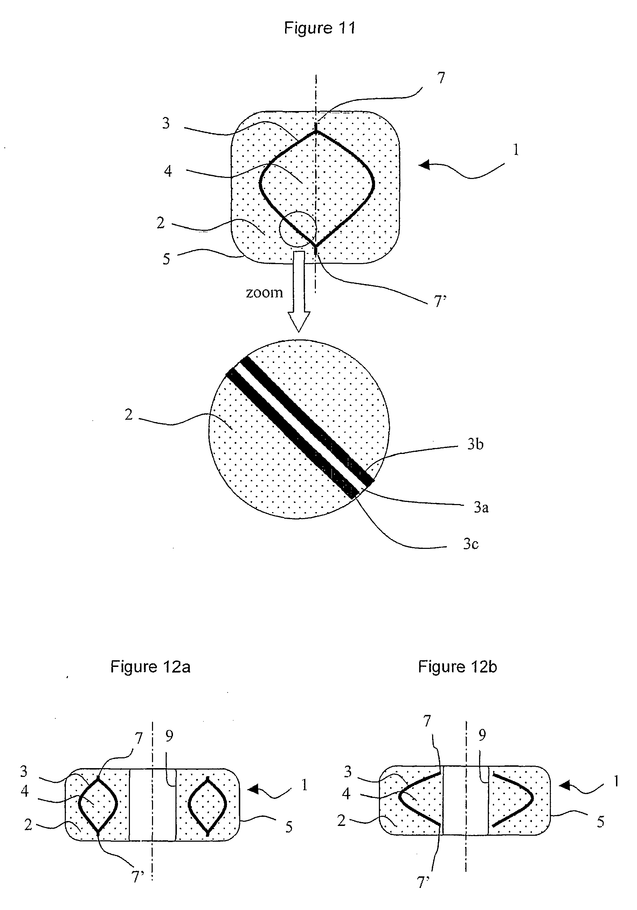

La figure 11 montre une dose réalisée conformément à l'invention et comprenant 5 couches.
Les figures 12a et 12b illustrent des doses annulaires faisant partie de l'invention.

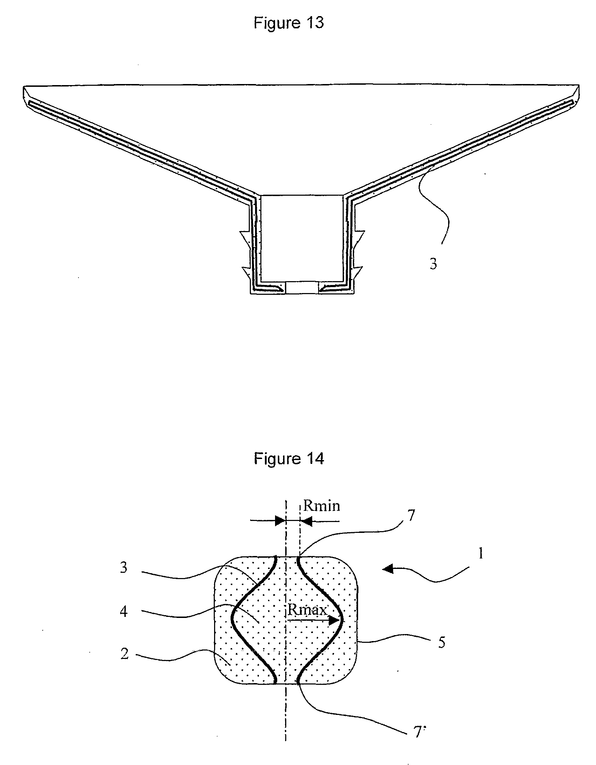

La figure 13 présente un objet multicouche obtenu à partir de la compression de la dose présentée sur la figure 12a.
La figure 14 est un autre exemple de dose faisant partie de l'invention.

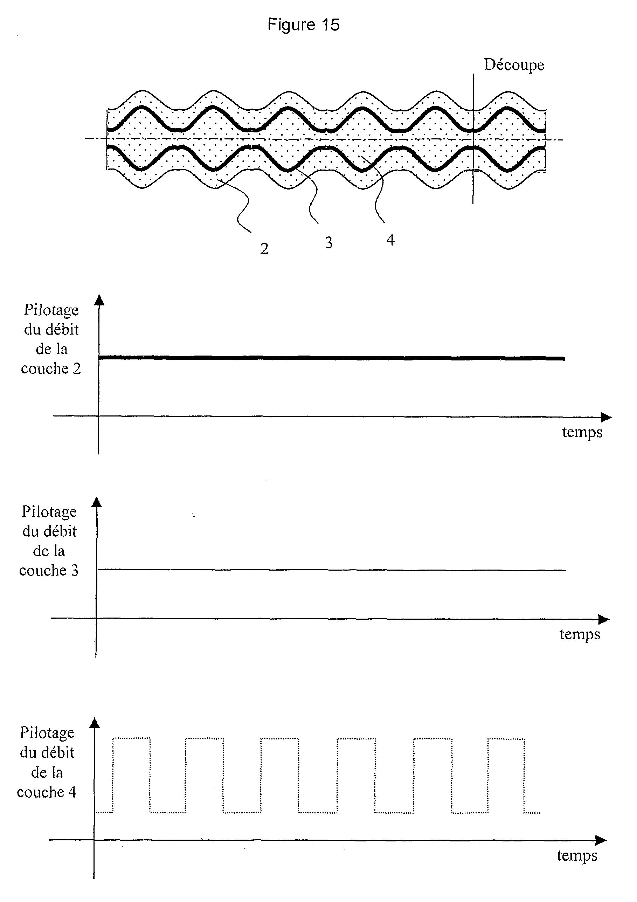

Les figures 15 à 19 décrivent des méthodes permettant de réaliser des doses telles que décrites sur les figures 9, 11, 12 et 14.
La figure 15 illustre une première méthode de réalisation des doses selon laquelle le débit de l'une des couches varie périodiquement.

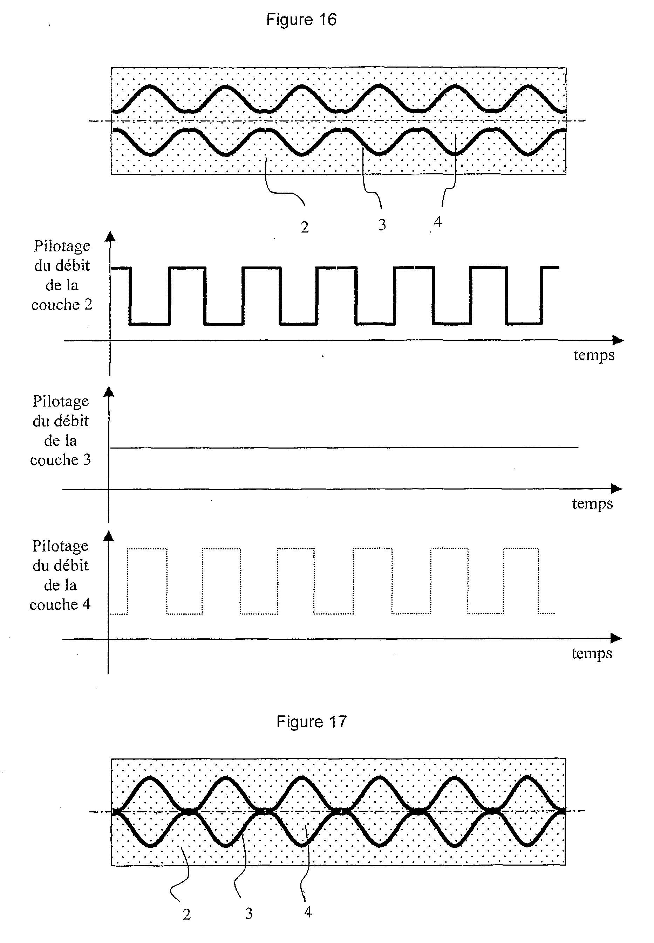

La figure 16 montre une deuxième méthode de réalisation de doses selon laquelle le débit de deux couches varie périodiquement et en opposition de phase.
La figure 17 illustre un jonc multicouche servant à la réalisation de doses multicouches et pouvant être réalisée avec la méthode de réalisation décrite figure 16.

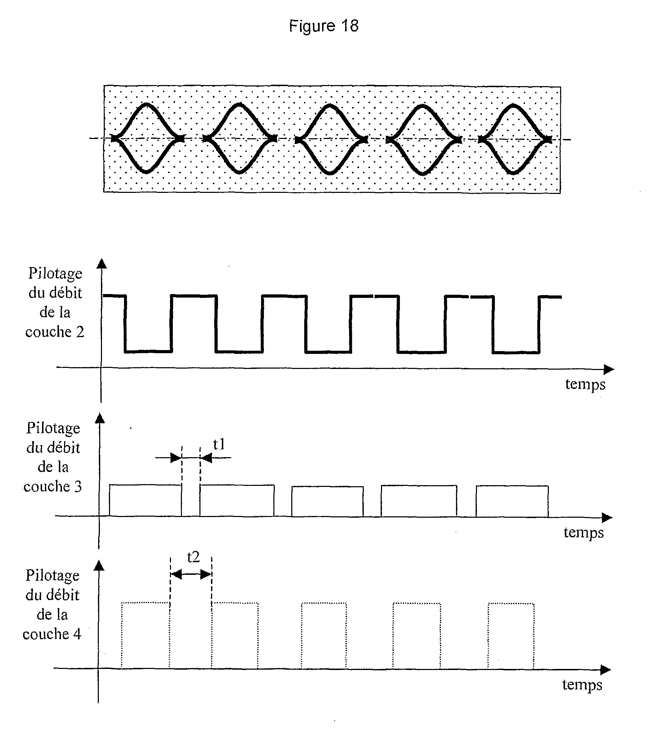

La figure 18 illustre une troisième méthode de réalisation de doses multicouches selon laquelle le débit de toutes les couches varie périodiquement et avec un débit global ayant de faibles variations.

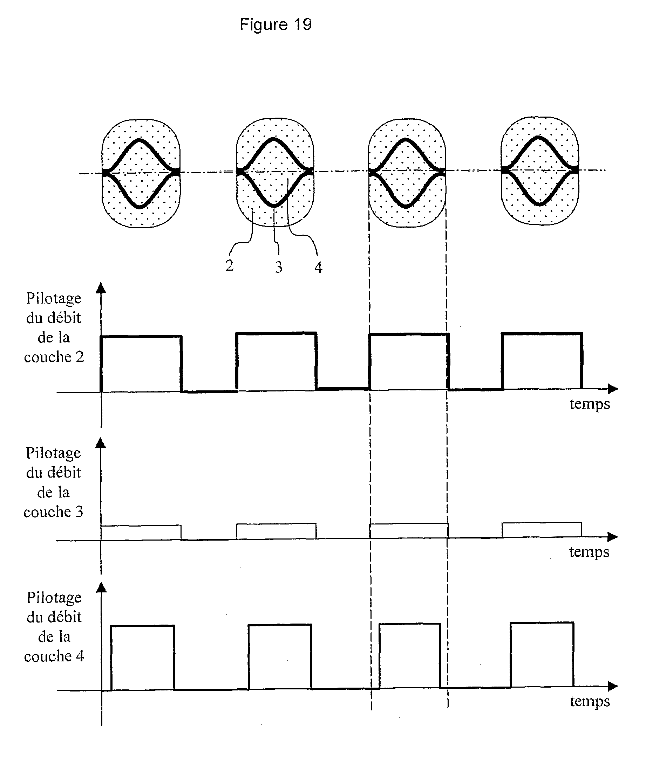

La figure 19 montre une autre méthode de réalisation de doses multicouches selon laquelle le débit de chaque couche varie périodiquement et selon laquelle le débit global est périodiquement nul,

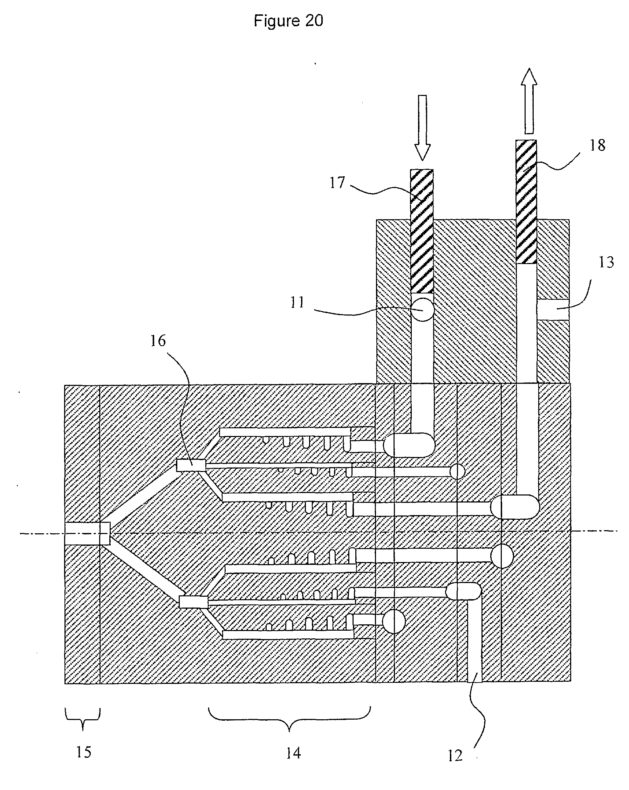

La figure 20 illustre un dispositif permettant de réaliser des doses multicouches selon l'invention.

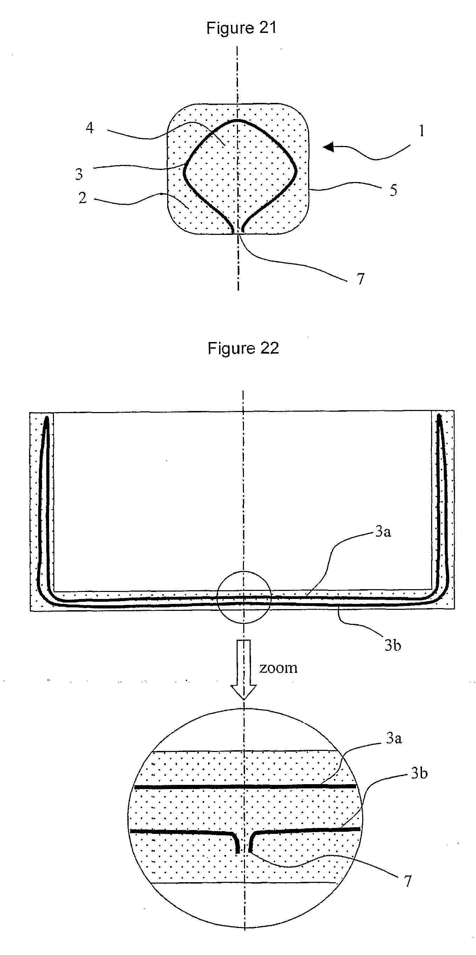

Les figures 21 à 27 illustrent un autre exemple de doses multicouches, une méthode de réalisation ainsi qu'un dispositif.
La figure 21 montre un autre type de dose multicouche correspondant à l'invention.
La figures 22 montre l'objet multicouche obtenu à partir de la compression de la dose décrite sur la figure 21.

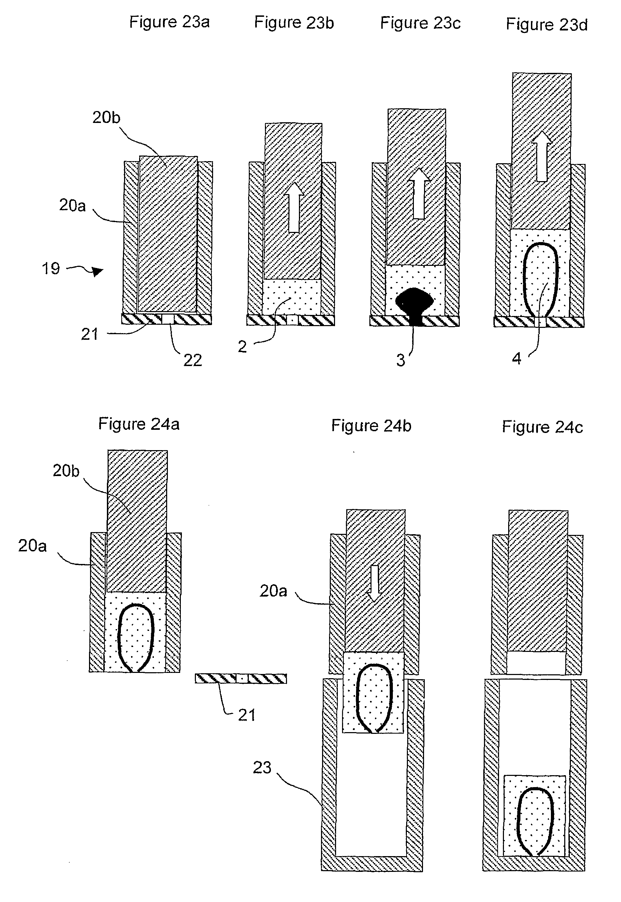

Les figures 23a à 23d illustrent la méthode de réalisation de la dose décrite sur la figure 21.
Les figures 24a à 24c montrent une méthode pour transférer la dose dans le moule de compression.

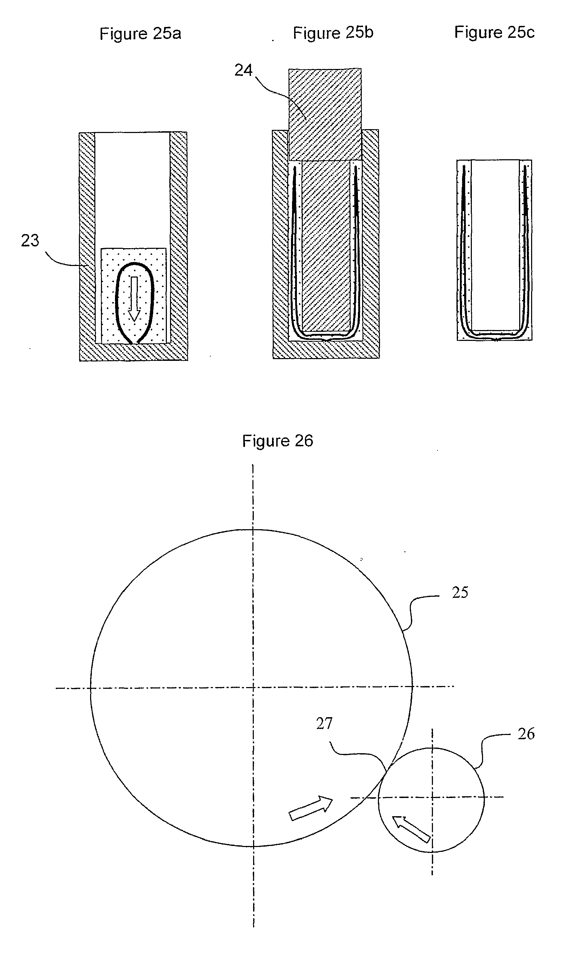

Les figures 25a à 25c illustrent la compression de la dose dans le dispositif de compression.
La figure 26 montre le concept général d'un dispositif pouvant être utilisé pour la réalisation de doses multicouches.

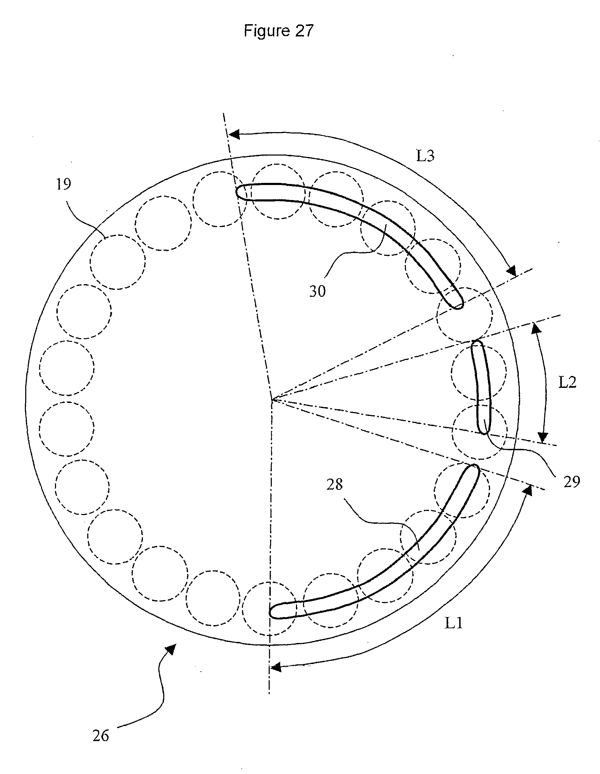

La figure 27 montre un dispositif pour la réalisation des doses représentées sur la figure 21.

### Description détaillée des figures

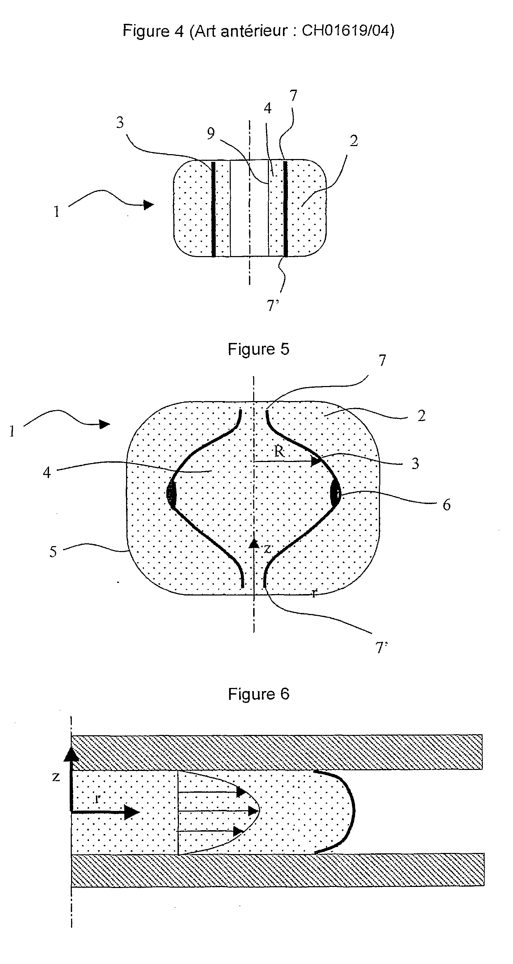

L'invention consiste à réaliser des doses multicouches selon le concept représenté figure 5. Cette dose est constituée d'une première résine synthétique formant la dose et d'au moins une deuxième résine emprisonnée dans la première résine et formant une fine couche dont la distance à l'axe de symétrie R et l'épaisseur E varie en fonction de la position sur l'axe de symétrie z. Ce type de dose permet d'optimiser conjointement la position de la couche de résine barrière dans l'objet moulé, ainsi que l'épaisseur de cette couche.

Afin de mieux comprendre l'intérêt de la dose décrite précédemment, il est nécessaire de considérer l'écoulement des résines pendant la compression de la dose (figure 6). Cet écoulement dépend principalement des propriétés rhéologiques des résines lors de la compression ainsi que de la géométrie de l'objet. La figure 6 montre que cet écoulement est plus rapide à mi distance entre les parois que proche des parois de l'outillage. A proximité des parois de l'outillage, la vitesse de déplacement des particules tend vers zéro, mais la déformation par cisaillement est élevée. Inversement, à mi distance entre les parois la vitesse des particules est maximal et la déformation par cisaillement est minimale. Pendant l'écoulement, la couche de résine fonctionnelle est entraînée et se déforme de façon non uniforme en fonction de sa position dans le profil d'écoulement. Ainsi, la position finale de la couche de résine fonctionnelle dans l'objet est déterminée par la position initiale de la couche fonctionnelle dans la dose et par la somme des déformations subies pendant l'écoulement.

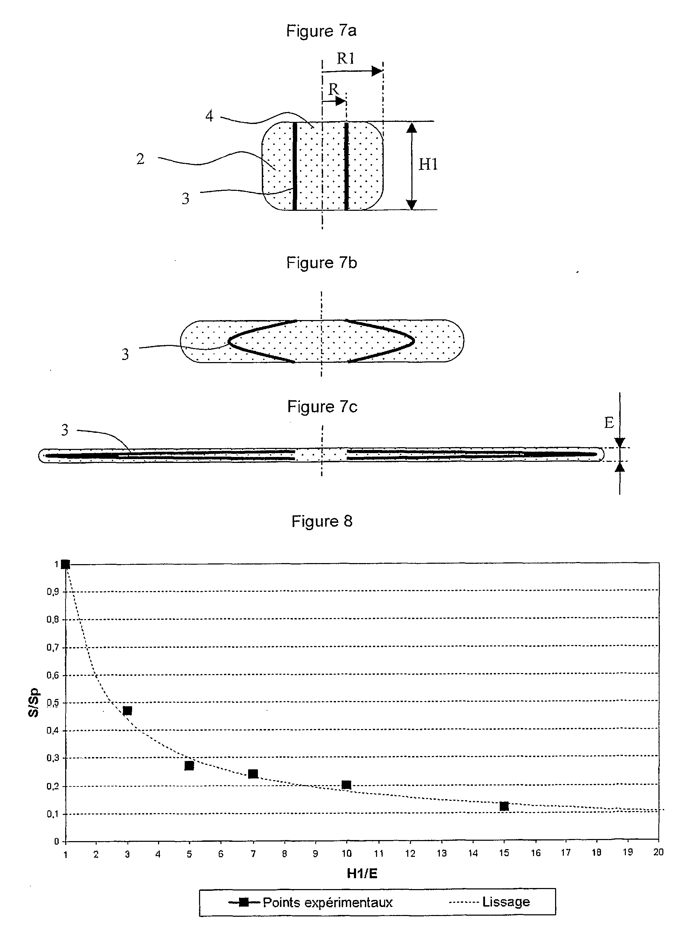

Les figures 7a à 7c illustrent la compression d'une dose telle que proposée dans le brevet JP 2098415 afin de démontrer les limites des objets multicouches obtenus selon cette méthode et mieux comprendre l'objet de la présente invention. La figure 7a montre une dose tri couche réalisée selon le brevet JP 2098415. Cette dose comporte une première résine 4 formant la partie centrale de la dose, une résine fonctionnelle 3 couvrant seulement les faces latérales de la première résine, et une troisième résine 2 couvrant seulement les faces latérales de la résine fonctionnelle. Cette dose a une hauteur appelée H1, un rayon extérieur R1, et une position radiale de la couche fonctionnelle R. La compression de cette dose conduit à une étape intermédiaire illustrée figure 7b. La figure 7b montre la déformation de la couche fonctionnelle dans la dose partiellement comprimée. Il est important de remarquer que cette couche se déforme vers la périphérie de l'objet, c'est à dire dans le sens des écoulements ; ce qui implique que la partie centrale de l'objet ne peut pas être couverte par la couche fonctionnelle. Il est intéressant de noter également qu'à l'étape intermédiaire la couche fonctionnelle est encore éloignée du front de matière ; ce qui indique que l'objet obtenu à l'étape intermédiaire ne présente pas de propriétés barrières au niveau de la périphérie. La figure 7c illustre l'objet obtenu après compression de la dose. La couche fonctionnelle 3 s'est propagée jusqu'à l'extrémité de l'objet tout en restant encapsulée au niveau de la périphérie de l'objet. Comme le montre la figure 7c, la couche fonctionnelle ne s'est pas propagée dans la partie centrale de l'objet. L'objet obtenu selon cette méthode présente donc l'inconvénient de ne pas présenter de propriétés barrière en son centre.

Des objets tels que représentés sur la figure 7c ont été réalisés à partir de doses telles qu'illustrées figure 7a. Les résultats expérimentaux ont été reportés sur la figure 8. La surface de l'objet est notée Sp ; la surface centrale de l'objet multicouche non couverte par la couche fonctionnelle est notée S ; l'épaisseur de l'objet est notée E, l'épaisseur de la dose est notée H1. Le rapport H1/E représente le taux de compression. La figure 8 montre comment varie la fraction de surface non couverte par la couche fonctionnelle S/Sp en fonction du taux de compression H/H1. Le rapport S/Sp est supérieur à 10% même pour des taux de compression de 20. Ce résultat indique que la couche fonctionnelle couvre dans le meilleur des cas 90% de la surface de l'objet. La mesure des propriétés barrière sur un objet ayant 90% de sa surface couverte par la matière fonctionnelle montre que cet objet est au moins 10 fois moins imperméable au gaz que le même objet réalisé selon l'invention et ayant 100% de sa surface couverte par la couche fonctionnelle. Ces résultats ont été obtenus en utilisant une résine fonctionnelle 100 fois plus imperméable que la résine de base.

La figure 9 montre une premier exemple de dose multicouche correspondant à l'invention. Cette dose comprend une première couche de résine 4 encapsulée dans une couche de résine fonctionnelle 3, ladite couche de résine fonctionnelle 3 étant elle même encapsulée dans une couche de résine 2 formant la surface extérieure 5 de la dose 1. Les extrémités 7 et 7' de la couche fonctionnelle se rejoignent chacune en 1 point de sorte que la couche 4 est totalement emprisonnée dans la couche fonctionnelle 3. La position de la couche fonctionnelle dans la dose permet après compression de couvrir 100% de la surface de l'objet, c'est à dire la périphérie et le centre. Cela conduit à une position de la couche fonctionnelle dans la dose selon un profil tel qu'illustré figure 9 formant une sorte de poche fermée aux deux extrémités 7 et 7' et formant un ventre 10 situé environ à mi hauteur de la dose. La position radiale de ce ventre n'est pas aléatoire, elle est fixée par la géométrie de l'objet et celle de la dose. La position radiale exacte du ventre 10 permet de propager la couche jusqu'à la périphérie de l'objet et permet de garantir que la couche fonctionnelle reste encapsulée dans l'objet. Les expériences ont montré que la position radiale du ventre de la couche fonctionnelle dans la dose était fonction du taux de compression, de la géométrie de l'objet, et de la rhéologie des résines.

Un exemple d'objet multicouche obtenu à partir de la compression de cette dose est illustré figure 10. Cet objet présente la particularité de présenter une double couche de résine fonctionnelle couvrant toute la surface de l'objet. Cet objet est obtenu en comprimant la dose multicouche dans un dispositif de compression simple ne nécessitant pas de modification par rapport au dispositif de compression qui serait utilisé pour réaliser le même objet à partir d'une dose monocouche. Une observation détaillée de l'objet multicouche au niveau de l'axe de symétrie tel qu'illustré figure 10 montre les extrémités 7 et 7' de la couche fonctionnelle formant une sorte de pic perpendiculaire à la surface de la couche.

La figure 11 montre que l'invention ne se limite pas à une dose tri couche tel qu'illustré figure 9. Une dose comprenant 5 couches telle qu'illustrée figure 11 est particulièrement avantageuse car l'insertion d'une couche adhésive 3b et 3c de part et d'autre de la couche barrière 3a permet d'associer des résines de nature différente tout en garantissant une bonne adhésion entre les différentes couches, ce qui évite les éventuels problèmes de délamination ou décohésion dans les objets multicouches. Les couches adhésives et barrière sont parallèles et en faible quantité. L'ensemble des couches adhésives 3b et 3c et de la couche barrière 3a formant la couche fonctionnelle 3 représente généralement une quantité de résine inférieure à 15% du volume total de résine formant la dose, et préférentiellement une quantité intérieure à 10%.

Les figures 12a et 12b montrent que l'invention ne se limite pas à des doses cylindriques telles qu'illustrées figure 9 ; ces doses peuvent être annulaire afin de réaliser des objets multicouches comportant un orifice. Les doses annulaires multicouches telles que représentées figure 12a et 12b sont particulièrement avantageuses pour réaliser des objets multicouches comportant un orifice comme par exemple des têtes de tube. La dose présentée sur la figure 12a est utilisée quand la compression de la dose provoque un écoulement conjoint vers la périphérie et vers le centre ; tandis que le dose 12b est utilisée quand la compression de la dose ne donne lieu qu'à un écoulement vers la périphérie.

La figure 13 montre une tête de tube réalisée par compression moulage d'une dose multicouche telle que représentée figure 12a. On retrouve dans l'épaisseur de l'objet une double couche fonctionnelle couvrant toute la surface de l'objet. La couche fonctionnelle se propage jusqu'à la périphérie de l'objet et jusqu'à l'orifice tout en restant totalement encapsulée. Afin de contrôler la propagation de la couche dans les deux directions, il est nécessaire d'ajuster la géométrie et la position de la couche fonctionnelle à l'intérieur de la dose.

Des doses similaires aux doses présentées figures 9 et 12 peuvent être réalisées. La figure 14 montre une dose multicouche comportant une couche de résine 4 emprisonnée latéralement par une fine couche de résine fonctionnelle 3, elle même emprisonnée par une couche de résine 2 formant la surface externe 5 de la dose. La couche de résine fonctionnelle 3 définit une géométrie axisymétrique en forme de poire ouverte aux deux extrémités ; le rayon Rmin définissant l'ouverture aux extrémités étant inférieur ou égal à 80% du rayon maximal Rmax définissant le ventre de la couche fonctionnelle ; et de préférence Rmin est inférieur à 10% du rayon Rmax. La dose présentée figure 14 diffère singulièrement de la dose proposée dans le brevet JP 2098415 (figure 3) caractérisée par le fait que la couche de résine fonctionnelle forme une géométrie cylindrique. L'extrusion de doses telles que décrites dans le brevet JP 2098415 peut conduire à une géométrie de la couche de résine fonctionnelle qui n'est pas parfaitement cylindrique comme sur la figure 3, mais qui est légèrement déformée. Cette légère déformation de la couche fonctionnelle peut être est provoquée de façon naturelle ; par un effet conjoint de la relaxation des contraintes en sortie d'extrudeuse (phénomène de gonflement), et de la gravité qui crée un affaissement de la dose sous son propre poids. Ces déformations de la dose peuvent conduire à une géométrie de la couche fonctionnelle caractérisée par un rayon minimal Rmin supérieur à 80% du rayon maximal Rmax. Comme, il l'a été démontré précédemment, ce type de dose ne conduit pas à des objets multicouches ayant des propriétés d'imperméabilité élevées du fait de la surface non couverte par la couche fonctionnelle au centre de l'objet. L'invention permet d'améliorer l'imperméabilité des objets multicouches en augmentant de façon significative la surface de l'objet couverte par la couche barrière. Comme il le sera exposé plus loin, la réalisation de doses multicouches telles que présentée figure 14 nécessite un dispositif spécifique et ne peut être réalisé selon la méthode présentée dans le brevet JP 2098415.

La méthode de réalisation des objets multicouche exposée ci-dessous est particulièrement avantageuse pour réaliser des objets tels que des bouchons, des couvercles, des préformes ou encore des épaules de tube. Cette méthode peut être utilisée également de façon avantageuse pour réaliser des préformes sous forme de galette ; ces galettes étant ensuite utilisées en thermoformage ou thermoformage soufflage pour former des objets multicouches.

Les doses présentées figures 9, 11, 12 et 14 peuvent être réalisées selon plusieurs méthodes. Ces différentes méthodes ont un point commun qui consiste à co-extruder les résines afin de former une structure multicouche ; et au moins la résine formant la couche centrale 4 de la structure multicouche est extrudée avec un débit variable.

Une première méthode de réalisation des doses est illustrée figure 15. Cette méthode permet de réaliser des doses multicouches correspondant au type de dose présenté figure 14. Cette méthode consiste à co-extruder de façon continue un jonc multicouche tel que présenté figure 15. Le débit de la couche 2 formant la surface extérieure de la dose, et le débit de la couche fonctionnelle sont constants. Par contre, le débit de la couche 4 formant la couche interne de la dose varie de façon périodique entre une valeur maximale et minimale. La périodicité des variations de débit définit une longueur d'onde correspondant à la longueur de la dose et définit également la fréquence de découpe du jonc multicouche. Cette méthode est particulièrement avantageuse pour réaliser des doses multicouches à très grande cadence. La méthode de réalisation illustrée figure 15 permet également de réaliser des doses ayant la couche 4 totalement encapsulée dans la résine fonctionnelle 3. Pour cela, la couche de résine 4 doit avoir un débit variant de façon périodique entre un débit maximal et un débit nul.

Une deuxième méthode de réalisation des doses est illustrée figure 16. Cette méthode diffère de la méthode illustrée figure 15 par le fait que le débit des couches de résines 2 et 4 varient de façon périodique et en opposition de phase de sorte que le débit global reste constant ou varie faiblement. Le débit de la couche fonctionnelle reste constant. Le jonc multicouche est coupé en sortie du dispositif de co-extrusion à la fréquence fixée par les variations périodiques du débit des couches 2 et 4. Cette méthode peut être avantageuse pour éviter des défauts liés à des variations trop brutales du débit global (instabilités d'extrusion, peau d'orange...). Les variations de débit des couches 2 et 4 à la sortie du dispositif de co-extrusion sont généralement progressives même si le signal de pilotage est en créneau comme indiqué sur la figure 15. Ce phénomène est lié à l'inertie de la résine dans le dispositif. Il est possible également de piloter les variations de débit de façon progressive en utilisant des dispositifs appropriés.

La figure 17 illustre un jonc multicouche qui peut être obtenu selon la méthode décrite figure 16. La découpe de ce jonc multicouche de façon périodique en sortie du dispositif de co-extrusion permet d'obtenir des doses multicouches. Le jonc multicouche est obtenu en extrudant la couche fonctionnelle avec un débit constant et en extrudant les couches de résine 2 et 4 avec un débit variant périodiquement et en opposition de phase. Le débit de la couche de résine 4 varie périodiquement entre un débit maximal et un débit nul, ce qui conduit à une encapsulation totale de la couche de résine 4 à l'intérieur de la couche de résine fonctionnelle.

La figure 18 illustre la méthode de réalisation de doses multicouches identiques à celle présentée figure 9. Cette méthode consiste à co-extruder un jonc multicouche comprenant une couche de résine 4, une couche fonctionnelle 3 et une couche de résine 2 formant la surface externe du jonc. Le débit des couches de résines 2 et 4 varie périodiquement et en opposition de phase. Le débit de la résine 2 formant la couche externe du jonc, varie entre une valeur minimale et maximale de façon périodique. Le débit de la couche fonctionnelle 3 varie périodiquement et a une valeur nulle pendant une durée t1. Le débit de la couche 4 varie également périodiquement et a une valeur nulle pendant une durée t2. La variation de débit des couches se fait à une fréquence, correspondant à la fréquence de production des doses. Pendant la durée t2, seule la couche externe 2 est extrudée, pendant la durée (t2-t1), seules les couches 2 et 3 sont extrudées.

Une autre méthode de réalisation de doses multicouches telles qu'illustrées figure 14 consiste en un procédé de co-extrusion discontinu, caractérisé par le fait que le débit global de résine co-extrudée varie entre une valeur maxi et une valeur nulle ; la quantité de matière dosée pendant une période correspondant à une dose. Cette méthode de réalisation est illustrée figure 19. Pendant une durée t1 le débit global co-extrudé est nul, et pendant une durée t2-t1 seules les couches 2 et 3 sont extrudées ce qui permet d'encapsuler la couche 4 à l'intérieur de la couche de résine fonctionnelle 3. La méthode de réalisation de doses multicouches selon la méthode 19 présente l'avantage de permettre un dosage volumétrique de la dose multicouche, donc une plus grande régularité des doses.

L'invention ne se limite pas à une méthode de réalisation de doses multicouches comprenant 3 couches. Par exemple, pour la réalisation de doses comprenant 5 couches comme illustré figure 11, une méthode de pilotage similaire à la méthode illustré figure 18 peut être utilisée.

De même l'invention ne se limite pas à des méthodes de réalisation de doses cylindriques ; des doses annulaires par exemple pouvant être réalisées.

Plusieurs dispositifs peuvent être utilisés pour réaliser des doses multicouches selon les méthode illustrées figures 15 à 18 ; ces méthodes consistant à co-extruder un jonc ou tube multicouche et à faire varier le débit d'une ou plusieurs couches de façon périodique ; le jonc ou tube multicouche étant ensuite coupé périodiquement afin de former les doses. Le dispositif comprend au moins une tête de co-extrusion reliée à plusieurs extrudeuses afin d'alimenter les résines fondues dans la tête de co-extrusion, et des moyens pour faire varier de façon périodique le débit d'une ou plusieurs couches.

La figure 20 illustre un exemple de dispositif pour réaliser des doses multicouches. Ce dispositif comprend des canaux 11, 12 et 13 pour l'alimentation respective des résines 2, 3 et 4 ; la résine 3 formant la couche fonctionnelle, et les résines 2 et 4 formant respectivement les couches externes et interne de la dose. Les canaux 11, 12 et 13 sont reliés aux extrudeuses via des moyens appropriés connus. Le dispositif comprend également un répartiteur 14 permettant de répartir convenablement chaque couche sur la circonférence. Plusieurs type de répartiteurs peuvent être utilisés comme par exemple des répartiteurs spiralés ou des répartiteurs à géométrie cardioïde ou en porte manteau. Le dispositif comprend un embout 15 qui permet de modifier la géométrie du jonc ou du tube extrudé en changeant la géométrie de l'embout. Le dispositif aura préférentiellement une jonction commune 16 des couches de résines 2, 3 et 4.

Cette jonction commune 16 permet une variation aisée de la position de la couche fonctionnelle 3 en faisant varier les débits respectifs des couches 2 et 4. Le dispositif est caractérisé par des moyens 17 et 18 permettant de faire varier périodiquement le débit des couches de résine 2 et 4. Le mouvement alternatif des pistons 17 et 18 permet une variation rapide et périodique du débit des couches 2 et 4. Un mouvement de descente du piston crée une montée en pression et par conséquent une augmentation du débit de la couche. Inversement, une montée du piston crée une diminution de pression et diminue le débit de la couche. Pour plus d'efficacité le piston peut être associé à un ou deux obturateurs le premier étant situé en amont et le second en aval du piston. Le piston peut être actionné mécaniquement, ou par l'intermédiaire d'un vérin. L'invention ne se limite pas au dispositif décrit précédemment. Des pistons et obturateurs peuvent être également associés à la couche fonctionnelle 3. Un dispositif similaire à celui décrit figure 20 peut être utilisé pour réaliser une dose comprenant 5 couches.

La figure 21 illustre une autre dose multicouche particulièrement avantageuse pour réaliser des objets multicouches par compression moulage. Cette dose comprend une première couche de résine 4 formant la partie interne de la dose ; une fine couche de résine fonctionnelle encapsulant la couche de résine 4, et une couche de résine 2 formant la couche externe de la dose et encapsulant la couche de résine fonctionnelle 3. La couche fonctionnelle 3 définit une géométrie tridimensionnelle axisymétrique en forme de poire ; et possède une extrémité 7 située proche de l'axe de symétrie formant une petite ouverture légèrement conique. La couche 3 coupe l'axe de symétrie en un point situé à l'opposé de ladite extrémité 7.

Ces doses multicouches sont particulièrement avantageuses pour former des objets multicouches par compression moulage de ladite dose dans un moule. La figure 22 montre un objet multicouche réalisé à partir de la dose représentée figure 21. Cet objet comporte une double couche fonctionnelle 3a et 3b emprisonnée dans la paroi de l'objet; ladite couche fonctionnelle présentant une discontinuité au niveau de l'axe de symétrie de l'objet. Cette discontinuité se présente sous forme d'un trou de petit diamètre dans la couche fonctionnelle 3b de l'objet. Ce trou correspond à l'extrémité 7 de la couche fonctionnelle 3. Le diamètre dudit trou dans la couche fonctionnelle 3b est inférieur à une valeur de 10 mm et est généralement inférieur à 3 mm. L'objet multicouche 22 obtenu à partir de la dose représentée figure 21, présente une première couche 3a totalement absente de la surface de l'objet, ainsi qu'une deuxième couche 3b présentant une ouverture et éventuellement présente en surface de l'objet. Pour des raisons d'hygiène et de performances de l'objet multicouche 22, il est préférable que la couche 3b ne se trouve pas du coté de la surface de l'objet en contact avec le produit emballé.

L'invention ne se limite pas à une dose présentant 3 couches comme sur la figure 21. Il peut être avantageux d'avoir un nombre de couche plus élevé, notamment afin d'améliorer l'adhésion entre les couches. En ce sens, la couche fonctionnelle 3 présentée figure 21 peut être considérée comme un ensemble de plusieurs fines couches parallèles. Par exemple, la couche fonctionnelle peut elle même contenir 3 couches dont une couche de résine barrière prise en sandwich entre deux couches de résines adhésives.

La méthode de réalisation de doses multicouches représentée figure 21 est illustré figure 23a à 23d. Cette méthode consiste à mouler les doses multicouches et est caractérisée par le fait que les résines sont alimentées séquentiellement dans une cavité variable d'un moule de transfert 19 ; le volume de la cavité variant avec la quantité de résine alimenté dans ladite cavité. Ces doses ont ensuite transférées à l'état fondu dans le moule de compression afin de réaliser l'objet multicouche. La figure 23a montre le moule de transfert 19 avant remplissage des résines. Le fourreau 20a, le piston 20b et le couvercle 21 constituent le moule de transfert 19, et définissent une cavité, présentant une ouverture créée par l'orifice 22. Avant alimentation des résines, le volume de la cavité est réduit. La méthode consiste à alimenter tout d'abord la résine 2 formant la couche externe de la dose. La figure 23b montre la résine 2 alimentée par l'orifice 22, provoquant le déplacement du piston 20 et induisant conjointement une augmentation du volume de la cavité du moule de transfert 19 proportionnelle au volume de résine alimenté. La méthode consiste à alimenter ensuite la résine fonctionnelle 3 dans le moule de transfert 19. La figure 3c montre l'alimentation de la résine 3 et sa propagation à l'intérieur de la résine 2 déjà dans le moule. La méthode consiste enfin à alimenter la résine 4 formant la couche interne de la dose. La figure 3d illustre l'alimentation de la résine 4 et sa propagation à l'intérieur de la couche fonctionnelle 3 conjointement au déplacement du piston 20.

La dose multicouche à l'état fondu est ensuite transférée du moule de transfert au moule de compression. La méthode de transfert est brièvement illustrée à partir des figures 24a à 24c. La première étape de cette méthode illustré figure 24a consiste à séparer ou ouvrir le couvercle 21 en surface avec la surface inférieure de la dose multicouche. La dose est ensuite expulsée du moule de transfert 19 par l'intermédiaire du piston 20b tel qu'illustré figure 24b. La figure 24c montre la dose multicouche déposée dans la cavité du moule de compression 23.

La dose multicouche doit être à l'état fondue lors de son transfert dans le moule de compression 23 afin de permettre le moulage par compression et éviter des défauts d'aspect. Pour cela le contrôle de la température du moule de transfert 19 et du temps de séjour de la dose dans le moule de transfert est très important. La température des pièces constituant le moule de transfert 19 doit être ajustée, afin de permettre conjointement le démoulage de la dose ainsi que la formation d'une peau en surface de la dose suffisamment fine pour qu'elle refonde avant la compression. La température du moule de transfert doit être la plus élevée possible afin de s'approcher de la température la résine fondue, et le temps de séjour dans le moule de transfert doit être le plus court possible.

L'éjection de la dose multicouche dans le moule de compression peut être fait par d'autre méthode que celle illustrée figure 24. Par exemple, une ouverture latérale du fourreau 20a perpendiculairement à l'axe de symétrie permet une extraction plus facile de la dose.

Les figures 25a à 25c illustrent la compression de la dose multicouche. La figure 25a montre le positionnement de la dose dans la cavité du moule 23. La figure 25b montre la descente du poinçon 24 qui comprime la dose et forme l'objet multicouche. La figure 25c illustre l'objet multicouche obtenu.

Un dispositif pour la réalisation d'objets multicouches à partir d'une dose moulée est présenté schématiquement figure 26. Ce dispositif est constitué d'un premier carrousel 25 comprenant des moules, des moyens pour la compression des doses ainsi que des moyens pour l'éjection des objets moulés. Ce dispositif est constitué également d'un deuxième carrousel comprenant les moules de transfert 19, des moyens pour alimenter les résines séquentiellement dans les moules de transfert, des moyens pour augmenter le volume de la cavité des moules de transfert pendant le remplissage des résines dans lesdits moules, et aussi des moyens pour transférer les doses dans les moules de compression. Le transfert des doses se fait au point de rencontre 27 de la trajectoire des moules de transfert et des moules de compression. Le dispositif comprend en outre des moyens pour mettre en rotation les carrousels et des moyens de régulation et de contrôle des paramètres.

La description du carrousel de transfert 26 est illustrée figure 27. Ce carrousel en rotation porte des moules de transfert 19. Pendant la rotation du carrousel 26, les moules 19 passent séquentiellement au dessus d'une première rainure d'alimentation 28, d'une deuxième rainure d'alimentation 29 et d'une troisième rainure d'alimentation 30. Lesdites rainures d'alimentation 28, 29 et 30 sont fixes et sont reliées à des extrudeuses. Lorsque le moule de transfert 19 passe au droit d'une rainure, la résine alimentée sous pression dans la rainure remplit la cavité dudit moule. La figure 27 indique qu'un moule passant séquentiellement au dessus des rainures 28, 29 et 30 se remplit séquentiellement des résines alimentées dans les rainures respectives. Ainsi en alimentant respectivement les résines 2, 3 et 4 dans les rainures 28, 29 et 30 on obtient une dose identique à celle présentée sur la figure 21. Les quantités respectives de résines alimentées dans la cavité du moule de transfert 19 peut être ajustée avec les longueurs respectives L1, L2 et L3 des rainures 28, 29 et 30 ainsi qu'avec la pression d'alimentation de chaque résine.

Les objets réalisés selon l'invention présentent des propriétés barrière particulièrement avantageuses. Ceci peut s'expliquer en partie en remarquant que la plupart des objets réalisés selon l'invention présentent une couche fonctionnelle couvrant suffisamment la surface de l'objet et en particulier la surface proche de l'axe de symétrie de l'objet.

Les résines utilisées dans le cadre de l'invention correspondent aux résines thermoplastiques couramment utilisés, et plus particulièrement celles utilisées dans le secteur de l'emballage. Parmi les résines barrières qui peuvent être utilisées pour former la couche fonctionnelle 3, on peut citer les copolymères d'éthylène vinyl alcool (EVOH), les polyamides tels que le Nylon-MXD6, les copolymères acrylonitrile methyl acrylate (BAREX), les polymères fluorés tels que le PVDF. Citons également quelques résines pouvant être utilisées pour les couches 2 et 4 de la dose : polyéthylène (PE), polypropylène (PP), polystyrène (PS), polyamide (PA), polyester (PET). Cette liste n'est pas exhaustive. Lors du choix des résines, il est important de sélectionner des produits ayant des viscosités voisines. En général, il est préférable d'utiliser des résines qui à la température de travail présentent un rapport de viscosité inférieur à 10, et de préférence on choisira un rapport de viscosité inférieur à 3.

L'invention concerne également des doses multicouches comprenant plusieurs couches fonctionnelles ; lesdites couches fonctionnelles étant emprisonnées individuellement dans une résine formant au moins 80% du volume de ladite dose. Selon l'invention au moins une couche fonctionnelle a une distance à l'axe de symétrie qui varie. L'utilisation d'une dose comportant plusieurs couches fonctionnelles peut être avantageux à très grande cadence de production. En effet, aux très grandes cadences, il est difficile d'obtenir de fortes variations de débit. La deuxième couche fonctionnelle peut être de géométrie tubulaire centrée sur l'axe de symétrie de la dose ; la position radiale de cette couche dans la dose étant telle que la compression de la couche conduit à un objet multicouche ayant deux couches fonctionnelles indépendantes qui se superposent partiellement et conduisent à des propriétés similaires à celles d'une couche continue. La deuxième couche fonctionnelle peut avoir également une distance à l'axe de symétrie variable. Une dose particulièrement intéressante a ses deux couches fonctionnelles parallèles.

L'invention est particulièrement intéressante pour réaliser des objets multicouches tels que des préformes ou des bouchons.

Dans les exemples présentés ici, les doses et les objets sont de géométrie simple, mais il va de soi que l'invention concerne n'importe quelle géométrie de dose et d'objet.

Les objets obtenus selon l'invention comportent une couche fonctionnelle 3 formant au moins un pli au niveau de la périphérie de l'objet. Des objets comportant également un second pli proche de l'axe de symétrie de l'objet peuvent être obtenus. Une disposition de la couche fonctionnelle en forme de zigzag peut être obtenue dans l'objet.

L'invention a été décrite avec une seule couche fonctionnelle 3 répartie dans la dose. Des doses comprenant plusieurs couches fonctionnelles 3 peuvent également être utilisées ; lesdites couches fonctionnelles étant toutes centrées sur l'axe de symétrie de ladite dose. Les objets multicouches obtenus sont caractérisés par le fait que les couches fonctionnelles se superposent au moins partiellement, et sont réparties dans tout l'objet.

D'autres géométries de doses peuvent être utilisées. Il a été observé que des doses présentant une partie de leur surface concave sont particulièrement avantageuses. De telles géométries de doses facilitent une bonne répartition de la couche fonctionnelle dans l'objet multicouche.

La réalisation d'emballages ou composants d'emballages pour des usages alimentaires nécessite des propriétés d'hygiène élevées. Il est ainsi souvent souhaitable que la couche fonctionnelle 3 ne soit pas en contact direct avec le produit emballé. Il peut être avantageux d'emprisonner totalement la couche fonctionnelle 3 dans la dose, de sorte que ladite couche fonctionnelle se trouve totalement emprisonnée dans l'objet.

Alternativement, seule une extrémité de la couche barrière peut ne pas être emprisonnée.

## Revendications

1. Dose multicouche (1) présentant un axe de symétrie pour la réalisation d'objets multicouches par compression moulage, constituée d'une première résine synthétique (2) et d'une fine couche fonctionnelle (3) emprisonnée dans ladite première résine (2) ; ladite couche fonctionnelle (3) représentant moins de 20 % du volume de la dose (1) ; **caractérisée en ce que** la couche fonctionnelle (3) forme l'enveloppe d'un corps de révolution autour de l'axe de symétrie et **en ce que** la distance de la couche fonctionnelle (3) à l'axe de symétrie est variable.

2. Dose (1) selon la revendication 1, **caractérisée en ce que** le rapport (Rmin-R0)/(Rmax-R0) est inférieur à 0,8 ; Rmax et Rmin étant respectivement les distances maximale et minimale de la couche fonctionnelle (3) à l'axe de symétrie ; et R0 étant le rayon d'un orifice centré autour de l'axe de symétrie, la valeur de R0 satisfaisant la relation suivante : 0 ≤ R0 < Rmin.

3. Dose (1) selon l'une des revendications précédentes **caractérisée en ce que** la couche fonctionnelle (3) forme elle même une structure multicouche (3a,3b,3c) comprenant une couche de résine barrière (3c) emprisonnée entre deux couches de résine adhésive (3a, 3b).

4. Dose (1) selon l'une des revendications précédentes comprenant plusieurs couches fonctionnelles.

5. Objet multicouche obtenu par compression moulage d'une dose multicouche (1) présentant un axe de symétrie, ladite dose (1) étant constituée d'une première résine synthétique (2) et d'une fine couche fonctionnelle (3) emprisonnée dans la première résine (2), la couche fonctionnelle (3) représentant moins de 20 % du volume de la dose (1), la couche fonctionnelle (3) formant l'enveloppe d'un corps de révolution autour de l'axe de symétrie de la dose (1) et la distance de la couche fonctionnelle (3) à l'axe de symétrie est variable

6. Procédé pour la fabrication d'une dose multicouche axisymétrique selon l'une quelconque des revendications 1 à 4 comprenant une étape où l'on fait varier la distance de la couche fonctionnelle (3) par rapport à l'axe de symétrie de la dose (1), ledit procédé consistant à co-extruder un jonc ou un tube multicouche de résines à l'état fondu puis à couper périodiquement ledit jonc ou ledit tube à l'état fondu; ladite étape étant réalisée en variant périodiquement le débit d'au moins une couche, la périodicité du débit étant égale à la périodicité de la coupe.

7. Procédé selon la revendication 6 **caractérisé par le fait que** le débit de deux couches varie périodiquement et en opposition de phase.

8. Procédé pour la fabrication d'une dose multicouche axisymétrique selon l'une quelconque des revendications 1 à 4 comprenant une étape où l'on fait varier la distance de la couche fonctionnelle (3) par rapport à l'axe de symétrie de la dose (1), ledit procédé consistant à injecter dans la cavité d'un moule plusieurs résines à l'état fondu (2,3) dont au moins une résine fonctionnelle (3) ; l'injection de la résine fonctionnelle (3) étant précédée et suivie de l'injection d'au moins une résine (2) ; puis à éjecter la dose (1) à l'état fondu de la cavité dudit moule; et à faire varier le volume de la cavité proportionnellement au volume de résine injectée.

## Patentansprüche

1. Mehrschichtige Dosis (1) mit einer Symmetrieachse für die Herstellung von mehrschichtigen Gegenständen durch Kompressionsformen, bestehend aus einem ersten synthetischen Harz (2) und einer feinen Funktionsschicht (3), die in dem ersten Harz (2) eingeschlossen ist; wobei die Funktionsschicht (3) weniger als 20 % des Volumens der Dosis (1) ausmacht; **dadurch gekennzeichnet, dass** die Funktionsschicht (3) die Hülle eines Umdrehungskörpers um die Symmetrieachse bildet, und dass der Abstand der Funktionsschicht (3) zur Symmetrieachse variabel ist.

2. Dosis (1) nach Anspruch 1, **dadurch gekennzeichnet, dass** das Verhältnis (Rmin-R0)/(RmaxR0) kleiner als 0,8 ist; wobei Rmax und Rmin der Maximal- bzw. Minimalabstand der Funktionsschicht (3) zur Symmetrieachse ist; und wobei R0 der Radius einer Öffnung ist, die um die Symmetrieachse zentriert ist, wobei der Wert von R0 dem folgenden Verhältnis entspricht: 0 ≤ R0 < Rmin.

3. Dosis (1) nach einem der vorhergehenden Ansprüche, **dadurch gekennzeichnet, dass** die Funktionsschicht (3) selbst eine mehrschichtige Struktur (3a, 3b, 3c) bildet, umfassend eine Barriereharzschicht (3c), die zwischen zwei Haftharzschichten (3a, 3b) eingeschlossen ist.

4. Dosis (1) nach einem der vorhergehenden Ansprüche, umfassend mehrere Funktionsschichten.

5. Mehrschichtiger Gegenstand, der durch Kompressionsformen einer mehrschichtigen Dosis (1) mit einer Symmetrieachse erhalten wird, wobei die Dosis (1) von einem ersten synthetischen Harz (2) und einer feinen Funktionsschicht (3) gebildet ist, die in dem ersten Harz (2) eingeschlossen ist, wobei die Funktionsschicht (3) weniger als 20 % des Volumens der Dosis (1) ausmacht, wobei die Funktionsschicht (3) die Hülle eines Umdrehungskörpers um die Symmetrieachse der Dosis (1) bildet und der Abstand der Funktionsschicht (3) zur Symmetrieachse variabel ist.

6. Verfahren zur Herstellung einer axialsymmetrischen mehrschichtigen Dosis nach einem der Ansprüche 1 bis 4, umfassend einen Schritt, in dem der Abstand der Funktionsschicht (3) zur Symmetrieachse der Dosis (1) variiert wird, wobei das Verfahren darin besteht, einen mehrschichtigen Ring oder ein mehrschichtiges Rohr aus Harzen im geschmolzenen Zustand zu coextrudieren und dann periodisch den Ring oder das Rohr im geschmolzenen Zustand auszuschneiden; wobei der Schritt durchgeführt wird, indem periodisch die Menge mindestens einer Schicht variiert wird, wobei die Periodizität der Menge gleich der Periodizität des Ausschneidens ist.

7. Verfahren nach Anspruch 6, **dadurch gekennzeichnet, dass** die Menge von zwei Schichten periodisch und gegenläufig variiert.

8. Verfahren zur Herstellung einer axialsymmetrischen mehrschichtigen Dosis nach einem der Ansprüche 1 bis 4, umfassend einen Schritt, in dem der Abstand der Funktionsschicht (3) zur Symmetrieachse der Dosis (1) variiert wird, wobei das Verfahren darin besteht, in den Hohlraum einer Gussform mehrere Harze im geschmolzenen Zustand (2, 3), darunter mindestens ein Funlctionsharz (3), einzuspritzen; wobei dem Einspritzen des Funktionsharzes das Einspritzen mindestens eines Harzes (2) vorangeht und folgt; dann die Dosis (1) im geschmolzenen Zustand aus dem Hohlraum der Form auszuwerfen; und das Volumen des Hohlraums proportional zum eingespritzten Harzvolumen zu variieren.

## Claims

1. A multilayer dose (1) having an axis of symmetry for the realization of multilayer objects by compression molding, constituted by a first synthetic resin (2) and by a thin functional layer (3) imprisoned in said first resin (2), said functional layer (3) representing less than 20% of the volume of the dose (1), **characterized in that** the functional layer (3) forms the shell of a body of revolution about the axis of symmetry and **in that** the distance from the functional layer (3) to the axis of symmetry is variable.

2. The dose (1) as claimed in claim 1, **characterized in that** the ratio (Rmin-R0)/(Rmax-R0) is less than 0.8, Rmax and Rmin being respectively the maximum and minimum distances from the functional layer (3) to the axis of symmetry and R0 being the radius of an orifice centered about the axis of symmetry, the value of R0 conforming to the following relationship: 0 ≤ R0 < Rmin.

3. The dose (1) as claimed in either one of the preceding claims, **characterized in that** the functional layer (3) itself forms a multilayer structure (3a, 3b, 3c) comprising a layer of barrier resin (3c) imprisoned between two layers of adhesive resin (3a, 3b).

4. The dose (1) as claimed in one of the preceding claims, comprising a plurality of functional layers.

5. A multilayer object obtained by compression molding of a multilayer dose (1) having an axis of symmetry, said dose (1) being constituted by a first synthetic resin (2) and by a thin functional layer (3) imprisoned in the first resin (2), the functional layer (3) representing less than 20% of the volume of the dose (1), the functional layer (3) forming the shell of a body of revolution about the axis of symmetry of the dose (1) and the distance from the functional layer (3) to the axis of symmetry being variable.

6. A process for the production of an axisymmetrical multilayer dose as claimed in any one of claims 1 to 4, comprising a step in which the distance from the functional layer (3) to the axis of symmetry of the dose (1) is varied, said process consisting in coextruding a multilayer rod or tube of resins in the molten state, then in periodically cutting said rod or said tube in the molten state, said step being carried out by periodically varying the flow rate of at least one layer, the periodicity of the flow rate being equal to the periodicity of the cutting.

7. The process as claimed in claim 6, **characterized in that** the flow rate of two layers varies periodically and in phase opposition.

8. A process for the production of an axisymmetrical multilayer dose as claimed in any one of claims 1 to 4, comprising a step in which the distance from the functional layer (3) to the axis of symmetry of the dose (1) is varied, said process consisting in injecting, into the cavity of a mold, a plurality of resins (2, 3) in the molten state, at least one of which is a functional resin (3), the injection of the functional layer (3) being preceded and followed by the injection of at least one resin (2), then in ejecting the dose (1) in the molten state from the cavity of said mold, and in varying the volume of the cavity proportionally to the volume of resin injected.
